# EUROPEAN PATENT APPLICATION

(11) **EP 2 166 495 A1**
(43) Date of publication of application: **24.03.2010**
(21) Application number: 09169164.2
(22) Date of filing: 01.09.2009
(51) Int. Cl.: G06Q 10/00, B65G 1/137

(54) **Article management system and method thereof**

(30) Priority: 04.09.2008 JP 2008226773
(71) Applicant: Toshiba TEC Kabushiki Kaisha, Shinagawa-ku Tokyo 141-8664 (JP)
(72) Inventor: Kushida, Hiroyuki, Shinagawa-ku, Tokyo 141-8664 (JP); Saegusa, Shinji, Shinagawa-ku, Tokyo 141-8664 (JP)
(74) Representative: Uchida, Kenji

(57) **Abstract**

An article management system is disclosed, which includes an object detection section detecting an object approaching to a article-placement section composed of a plurality of article-placement areas to place articles thereon and outputting object position information, an RF-tag reading section reading an RF-tag attached to each of the objects and outputting RF-tag read information, and an article position identifying section storing the object position information and the RF-tag read information correlating one information to another, and outputting the correlated information as article position identifying information, wherein the RF-tag reading section has a plurality of antenna sections that communicate with the RF-tags, and wherein communication coverage range of each of the antenna sections is defined to one or more of the article-placement areas. This system can be used to manage article locations in a store premise or a warehouse.

## Description

The present invention relates to an article management system for managing articles such as commodities and parts.

In the past, management-related works for articles such as commodities and parts in a store or warehouse have been performed in a visual manner by a store clerk or warehouse worker. Since such work operations are troublesome, hard to be efficiently done, and tend to create errors, a system that can reduce the human operations has been desired. Recently, wireless IC tags such as a radio frequency identification tag (RF tag) were developed. There is disclosed in Japanese Patent Application No. 2001-031218 a commodity management system that performs the management for commodities in a store or warehouse, each of which mounts such an RF tag with a commodity-specific ID code written therein.

The commodity management system described in the above patent performs inventory control such that a reading unit for exchanging signals with an RF tag mounted in a commodity is installed in each partition where a commodity or commodities are displayed. In this commodity management system, however, because a commodity location is identified by the address of the reading unit that reads and transmits a commodity ID code, if the size of the partition in which commodities are displayed is enlarged in the setting, the interval between the reading units provided in the respective partitions becomes larger, identifying the locations of the respective commodities becomes ambiguous. On the contrary, when the setting is made to reduce the partition size of the commodity display, the spacing between the reading units in the partitions becomes narrow so that an interference problem between the reading units or read errors including reading from RF units in adjacent partitions likely occur. Therefore, it becomes difficult to accurately detect positions of displayed respective commodities.

The present invention was made to solve the above problems. An object of the present invention is to provide an article management system capable of performing managements for article positions in a store or warehouse or for other tasks.

To accomplish the above purpose, the article management system according to the present invention comprises an object detection section for detecting an object approaching to an article-placement section composed of a plurality of article-placement areas and placing articles and for outputting object-position information; an RF-tag reading section having an RF-tag reading section for reading an RF-tag attached to the article and outputting the RF-tag read information, and an article-position identifying section for storing the object-position information and RF-tag read information that are correlated to each other and outputting the linked information as article-position identifying information, wherein the RF-tag reading section has a plurality of antenna sections communicating with the RF-tags and a communication range of each antenna section is set to each of the article-placement areas.

These and other objects and advantages of this invention will become apparent and more readily appreciated from the following detailed description of the presently preferred exemplary embodiments of the invention taken in conjunction with the accompanying drawings wherein:
FIG. 1 is a view showing a system configuration according to a first embodiment of the present invention;
FIG. 2 is a view showing a hardware configuration of a sensor section according to the embodiment of the present invention;
FIG.3 is a view showing a hardware configuration of an RF-tag reading section according to the embodiment of the present invention;
FIG. 4 is a view showing a hardware configuration of a system management section according to the embodiment of the present invention;
FIG. 5 is a view showing a structure of the sensor section according to the embodiment of the present invention;
FIG. 6 is a view showing a structure of the sensor section and commodity display shelves according to the embodiment of the present invention;
FIG. 7 is another view showing a structure of the sensor section and the commodity display shelves according to the embodiment of the present invention;
FIG. 8 is still another view showing a structure of the sensor section and the commodity display shelves according to the embodiment of the present invention;
FIG. 9 is a view showing a data structure of an object-position table according to the embodiment of the present invention;
FIG. 10 is a view showing a data structure of a valid area table according to the embodiment of the present invention;
FIG. 11 is a view showing a data structure of an RF-tag memory table according to the embodiment of the present invention;
FIG. 12 is a view showing a data structure of an RF-tag information buffer according to the embodiment of the present invention;
FIG. 13 is another view showing a data structure of an RF-tag information table according to the embodiment of the present invention;
FIG. 14 is a view showing a data structure of an article-position identifying table according to the embodiment of the present invention;
FIG. 15 is a view showing a data structure of an antenna-block setting table according to the embodiment of the present invention;
FIG. 16 is a plan view showing a display screen of an output section of the system management section according to the embodiment of the present invention;
FIG. 17 is a flowchart illustrating an operational procedure in the main-flow process of the article management system according to the embodiment of the present invention;
FIG. 18 is a flowchart illustrating an operational procedure of an object detection process according to the embodiment of the present invention;
FIG. 19 is a flowchart illustrating an operational procedure of an RF-tag reading process according to the embodiment of the present invention;
FIG. 20 is a flowchart illustrating an operational procedure of an article position identifying process according to the embodiment of the present invention;
FIG. 21 is a flowchart illustrating an operational procedure of the article management system according to a second embodiment of the present invention; and
FIG. 22 is a flowchart illustrating an operational procedure in the main-flow process of the article management system according to the second embodiment of the present invention.

### DETAILED DESCRIPTION OF THE INVENTION

Preferred embodiments of the present invention will now be described in more detail with reference to the accompanying drawings. However, the same numerals are applied to the similar elements in the drawings, and therefore, the detailed descriptions thereof are not repeated.

### [First Embodiment]

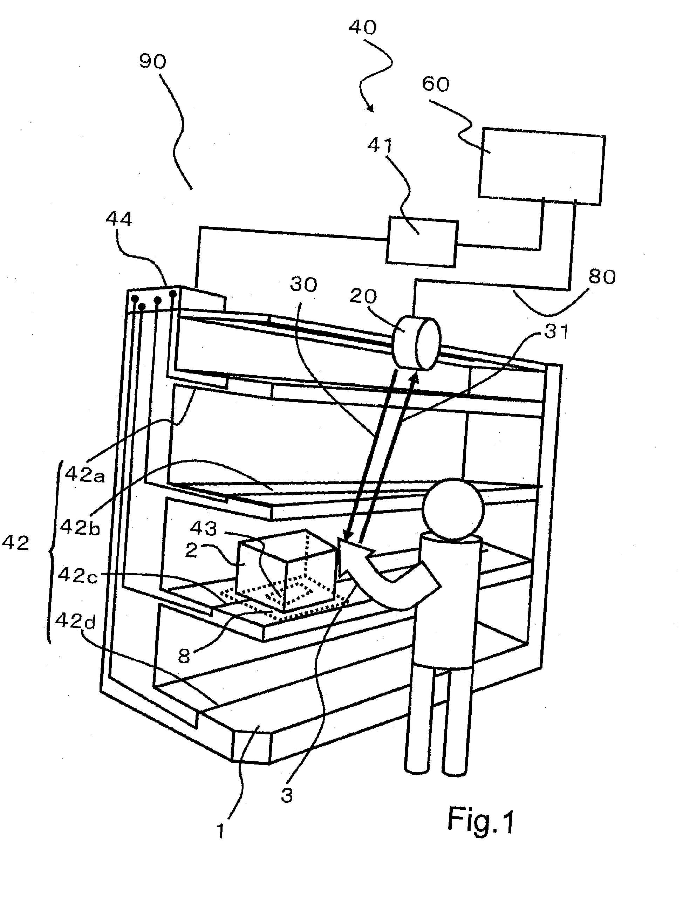

FIG. 1 is a view showing a configuration of an article management system 90 according to a first embodiment of the present invention. Article management system 90 is comprised of a sensor section 20 (object detection section), an RF-tag reading section 40, and a system management section 60 (information processing device).

A sensor section 20 is installed, for example, on commodity display shelves 1 (article-placement section) within a store premise. When sensor section 20 detects an object 3 approaching to a commodity 2 (article) displayed on commodity display shelves 1 or to a commodity display place 8, sensor section 20 measures a distance between sensor section 20 and object 3, and sends the information obtained by sensor section 20 to a system management section 60 as object position information of object 3.

The distance to object 3 is measured such that projection light 30 composed of infrared laser light of infrared rays having a wave length of some 0.7 µm to 0.1 mm is projected from sensor section 20 to object 3 and sensor section 20 receives reflected light 31 from object 3, and then the distance is measured based on the time difference between the projected time of projection light 30 and the detected time of reflected light 31. What can be considered as object 3 is a hand or arm of a store clerk or a worker carrying in and out commodities, or a commodity itself. Also considered can be an arm member of a robot or the like that performs carrying-in-and-out for commodities. For sensor section 20, an ultrasonic distant meter may be used instead of the infrared laser light.

An RF-tag reading section 40 is comprised of an RF-tag reader 41, leak-transmission lines 42a, 42b, 42c, and 42d, and a switching device 44. RF-tag reader 41 modulates a read signal for reading an RF tag 43 and continuously transmits a radiowave of this modulated read signal from leak-transmission line 42a, 42b, 42c, or 42d, which is sequentially switched by switching device 44. Having received the response radiowave from RF tag 43 residing within the communicable area of leak-transmission lines 42a, 42b, 42c, or 42d, RF-tag reader 41 demodulates the response radiowave and stores therein response data, i.e., RF-tag read information including commodity information such as a tag code for identifying a tag, a commodity code for identifying a commodity, a commodity name, etc. that are stored in RF tag 43.

For leak-transmission lines 42a, 42b, 42c, and 42d, a leak coaxial cable or leak waveguide can be used. The radiowave radiation characteristics of such leak-transmission lines 42a, 42b, 42c, and 42d differ from those of general single-type antennas such as a whip antenna or dipole antenna. That is, the leak-transmission lines 42a, 42b, 42c, and 42d each forms a fan-like radiation pattern upwardly viewed from the side of leak-transmission lines 42a, 42b, 42c, and 42d covering respective leak-transmission lines. The field intensity is distributed being strong in the proximity of leak-transmission lines 42a, 42b, 42c, or 42d and gradually weakened as apart from it. Leak-transmission lines 42a, 42b, 42c, and 42d may be disposed along each shelf board of commodity display shelves 1, or disposed a top board or rear plate of commodity display shelves 1, or embedded therein, so as not to obstruct commodities at the time of placing commodities thereon. In this way, the leak-transmission lines may be provided so as to be able to read only target commodities.

System management section 60 is connected to sensor section 20 and RF-tag reading section 40 via a communication line 80 such as a LAN or exclusive line and performs processing based on the object position information of object 3 output by the sensor and RF-tag read information acquired by RF-tag reading section 40.

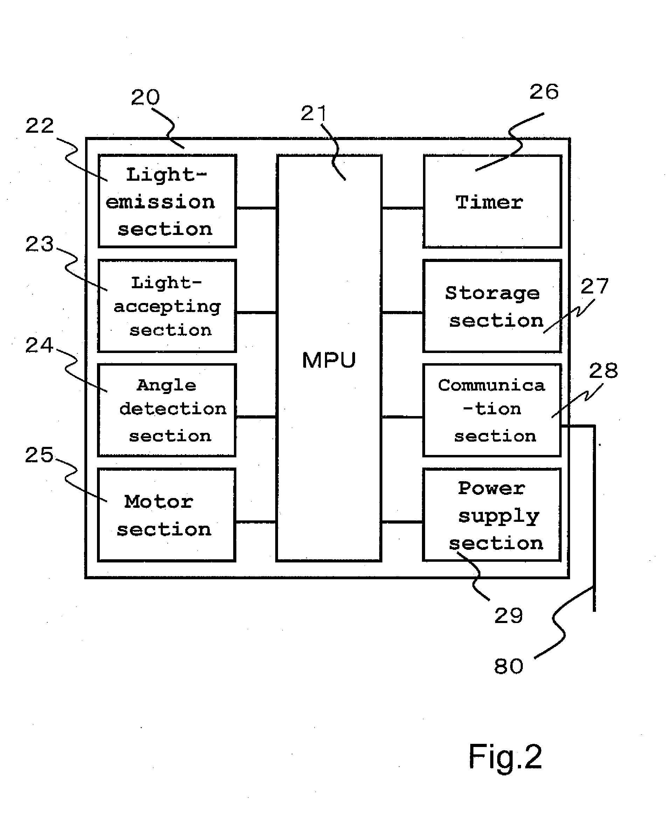

FIG. 2 shows a hardware configuration of sensor section 20. Sensor section 20 is comprised of a Micro Processing Unit (MPU) 21 of a control section controlling each part of the hardware, a light-emission section 22 (light-projecting section) for detecting object 3, a light-accepting section 23 (detection section) for detecting reflected light 31 from object 3, a timer section 26, a storage section 27 such as a hard disk or memory, a communication section 28 for transmitting and receiving data to/from system management section 60, and a power supply section 29.

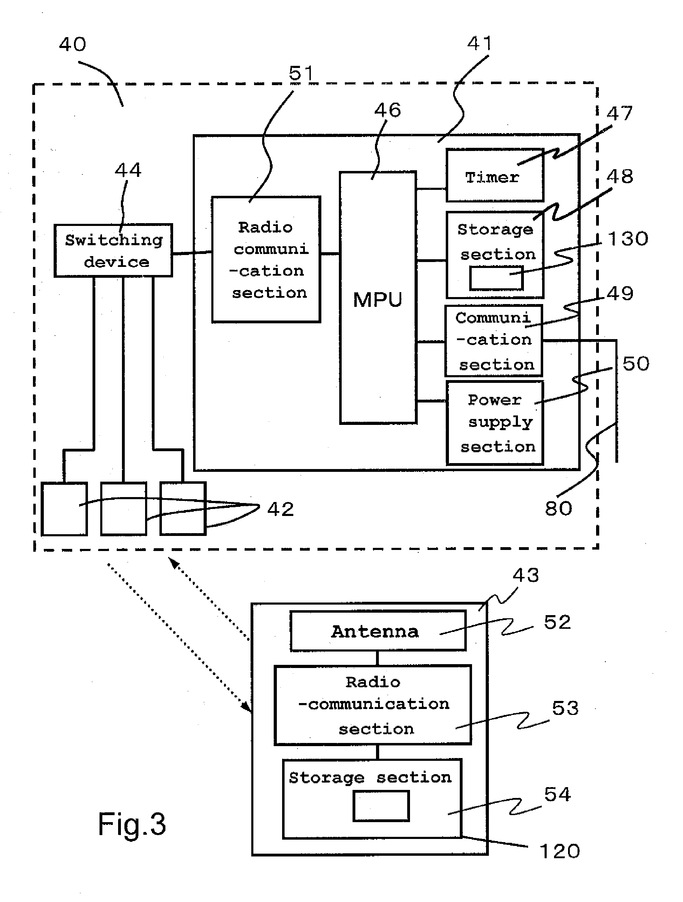

FIG. 3 shows a hardware configuration of an RF-tag reading section 40. RF-tag reading section 40 is comprised of leak-transmission lines 42a, 42b, 42c, and 42d, and a switching device 44. RF-tag reader 41 is comprised of a Micro Processing Unit (MPU) 46 of a control section controlling each part of the hardware, timer section 47, a storage section 48 such as a memory, a communication section 49 for transmitting and receiving data to/from system management section 60, a power supply section 50, and a radio communication section 51 communicating with RF tag 43 via leak-transmission lines 42a, 42b, 42c, and 42d. There are provided in storage section 48 of RF-tag reader 41 an RF-tag information buffer 130 that stores a tag code, a commodity code, and a commodity name that are received from RF tag 43. RF tag 43 is comprised of an antenna 52, a radio-communication section 53, and a storage section 54, in which an RF-tag memory table 120 is provided.

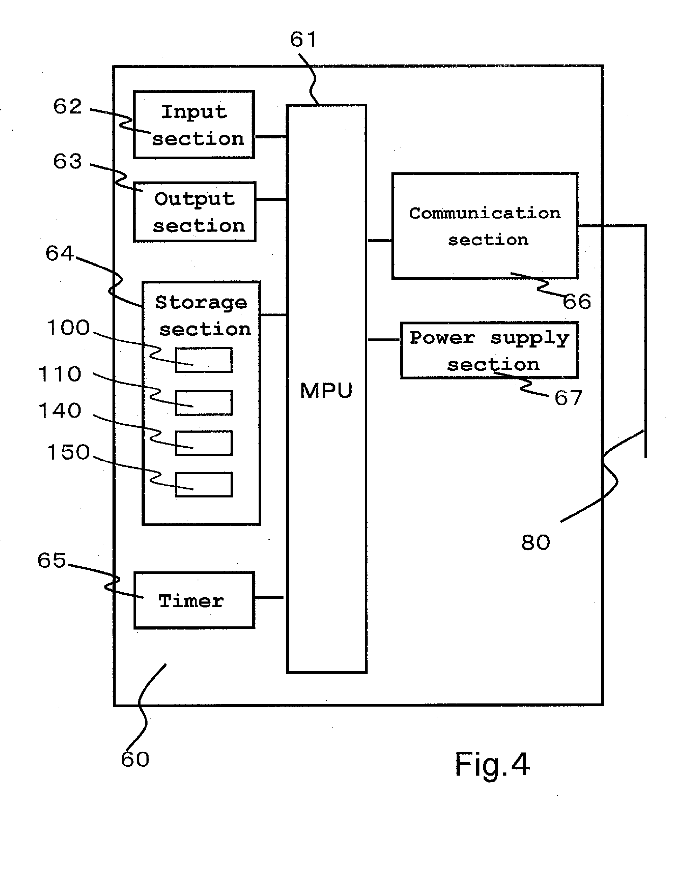

FIG. 4 shows a hardware configuration of a system management section 60. It is comprised of a Micro Processing Unit (MPU) 61 of a control section controlling each part of the hardware, an input section 62 including a keyboard and a mouse, an output section 63 including a display device such as a liquid display or organic EL display and an output device such as a printer, a storage section 64 such as a hard disk or memory, a timer 65, a communication section 66 for transmitting and receiving data to/from sensor section 20, RF-tag reading section 40, and other system, and a power supply section 67. There are provided in storage section 64 a object position information table 100, a valid area table 110, an RF-tag information table 140, an article-position identifying table 150, and antenna-block setting table 158.

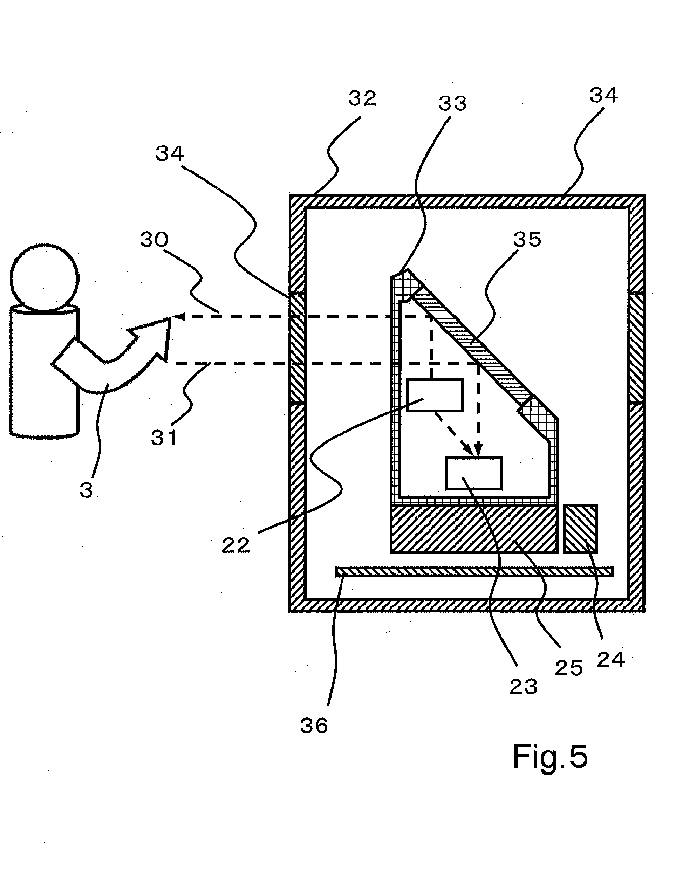

Sensor section 20 that functions as an object detection section will now be described. FIG. 5 shows a structure of the sensor section 20. Sensor section 20 is comprised of a housing 32, a rotation body 33, an angle detection section 24, a sensor control 36, etc. Housing 32 forms, for example, a tubular type, having an annular transparent window 34 that opens 180 degrees along its peripheral. Rotating body 33 is comprised of light-emission section 22 (light-projecting section), light-accepting section 23 (detection section), motor section 25, a projection/reception mirror 35, etc. Light-emission section 22 is composed of, for example, an infrared laser light source, and light-accepting section 23 is composed of a light sensor of a photo diode. Motor section 25 is composed of, for example, a brushless DC motor. An LED may be used for light-emission section 22 instead of an infrared laser light source.

Projection/reception mirror 35 functions to reflect projection light 30 emitted from light-emission section 22 and reflect reflected light 31 from object 3 towards light-accepting section 23. Projection/reception mirror 35 rotates together with rotation body 33, for example, at 10 Hz so that projection light 30 emitted from light-emission section 22 is projected via projection/reception mirror 35 in a range of 180 degrees along the transparent window 34 that opens 180 degrees on the peripheral of sensor section 20. The laser light can scan the peripheral of sensor section 20 two-dimensionally. Angle detection section 24, which is composed of a magnetic sensor, detects and outputs the angle of rotation body 33. Instead of a magnetic sensor, for example, a photo-interrupter may be used.

Sensor control 36 functions as an object-position calculating section. Sensor control 36, which is composed of MPU 21, timer section 26, storage section 27, communication section 28, power supply section 29, etc., controls the rotation of motor section 25 and measures angle θ of rotation body 33 that rotates by the signal output from angle detection section 24. The angle reference line for angle θ of rotation body 33 to be measured can be arbitrarily set. For example, with the angle detection resolution of one degree, angle θ of rotation body 33 can be measured and output by every degree movement from the arbitrarily determined angle reference line.

Sensor control 36 controls the emission of light-emission section 22 while controlling motor section 25 and the rotation of rotation body 33. Projection light 30 emitted from light-emission section 22 is projected through projection/reception mirror 35 and transparent window 34 to scan the peripheral of sensor section 20 at 10 Hz. If object 3 is present within this scanned area, light 31 reflected from object 3 passes through transparent window 34 and projection/reception mirror 35, and is detected by light-accepting section 23. Although the frequency of the scanning on the peripheral of sensor section 20 is set to 10 Hz, it can be extended to some 100 Hz in consideration of the moving speed of object 3.

In this embodiment, to calculate the distance using projection light 30 and reflected light 31, infrared laser light in short pulses is emitted from light-emission section 22 as projection light 30 and that reflected light 31 is detected by light-accepting section 23. Then, the distance is calculated from the time difference between the emission time of projection light 30 and the detection time of reflected light 31, i.e., the round-trip time of the light and the speed of projection light 30 as the reference and reflected light 31. An alternative method of calculating the distance is to obtain the distance by the phase difference between the respective phases of projection light 30 and reflected light 31 with the infrared laser light from light-emission section 22 modulated at a predetermined frequency using a sinusoidal wave. In the method of acquiring the distance from the phase difference, since a distance resulting in a phase difference of more than one period cannot be measured, the modulation frequency needs to be determined according to a predetermined detection area. Alternatively, by projecting an ultrasonic wave of a sound wave having a frequency of some 20 kHz or more, instead of using the infrared laser light, and detecting the reflected wave, the distance to the object 3 may be measured from the projection time of the ultrasonic wave and the detection time of the reflected wave.

Sensor control 36 calculates a distance r from sensor section 20 to object 3 from the time difference between the emission time of projection light 30 by light-emission section 22 and the detection time of reflected light 31 by light-accepting section 23 using the above-mentioned calculating method, and transmits to system management section 60 object position information composed of this calculated distance r, angle θ output by angle detection section 24, and the sensor detection time information, i.e., detection time of reflected light 31. Upon receipt of the object position information from sensor section 20, system management section 60 performs necessary processing based on these data. In this embodiment, the sensor section measures the distance to object 3 by projection light 30 composed of the infrared laser light. However, as described earlier, following the projection of an ultrasonic wave and detection of its reflected wave, the distance to object 3 may be measured from the projection time of the ultrasonic wave and the detection time of the reflected wave, in a similar fashion to the infrared laser light.

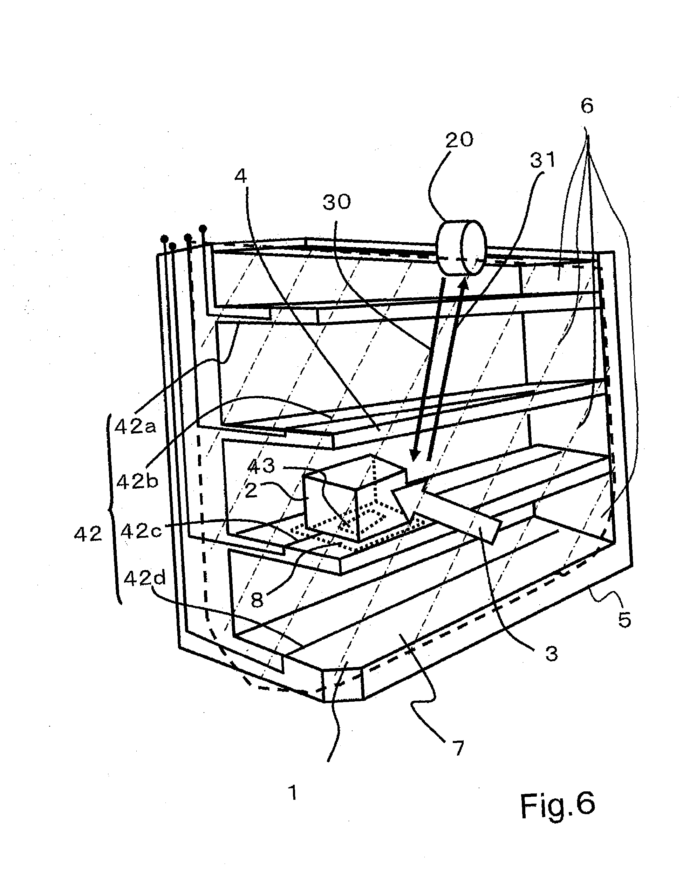

FIG. 6 illustrates a state that sensor section 20 is installed in commodity display shelves 1 (article-placement section). Sensor section 20 detects an object 3 approaching to commodity 2 (article) displayed on commodity display shelves 1 or a block (commodity-placing area), described later, of a commodity display place 8 of commodity 2. Sensor section 20 is installed, for example, near the center of a top part of shelf circumference 5 toward a side of shelf front 4 in an opened commodity taking in/out area 6 (opening section) of commodity display shelves 1. That is, a detection area 7 where object 3 is detected is provided so as to cover commodity taking in/out area 6 by virtue of projection light 30 emitted in a range of 180 degrees downwards from sensor section 20 so that object 3 approaching to commodities 2 placed at all the blocks 10 (article-placement areas) can be detected. Accordingly, the necessity to provide sensor section 20 for each block 10 can be eliminated, and therefore the cost can be reduced. If sensor section 20 is provided so as to allow detection of objects 3 in several blocks 10, the sensor installation place need not be restricted to the top part of shelf circumference 5, it may be provided at the lower part of shelf circumference 5 or on the left or right side thereof. Furthermore, if sensor section 20 is provided allowing detection of objects 3 in several blocks 10, not all blocks 10 need to be covered by the sensor section 20.

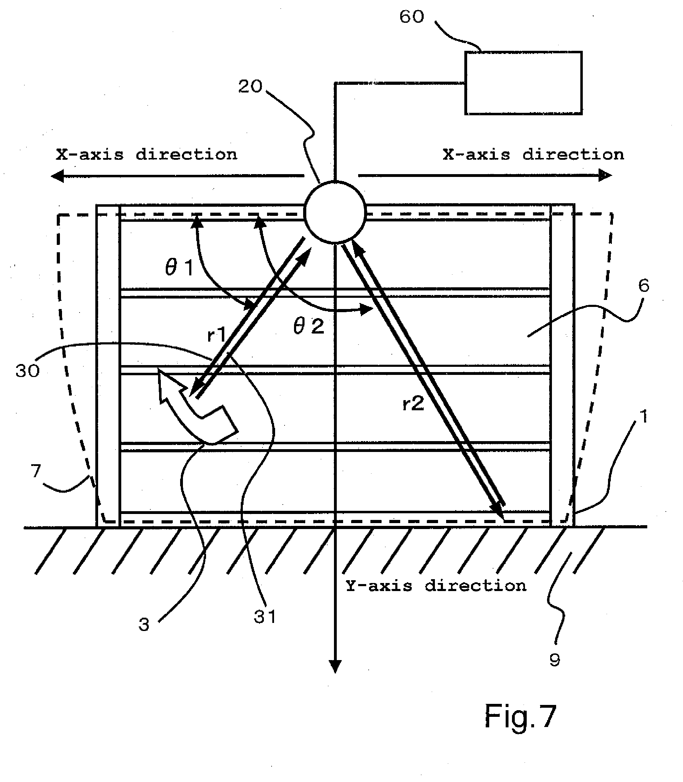

FIG. 7 is a view of commodity display shelves 1, viewed from shelf front 4, on which sensor section 20 is installed. Projection light 30 is projected downwardly in a range of 180 degrees around sensor section 20 from sensor section 20 installed near the center of top part of shelf circumference 5 of commodity display shelves 1. "X-axis direction" in the FIG. 7 represents lateral directions of commodity display shelves 1 viewed from shelf front 4 thereof.

As described earlier, since projection light 30 projected from sensor section 20 scans the peripheral of sensor section 20 rotating at 10 Hz, detection area 7 is formed covering the commodity taking in/out area of commodity display shelves 1. Thus, when object 3 enters this detection area 7, projection light 30 projected from sensor section 20 reflects on object 3, and that reflected light 31 can be detected by sensor section 20.

Sensor control 36 calculates distance r to object 3, as described earlier, and detects angle θ then to transmit position information composed of distance r and angle θ to system management section 60 at every scan. In FIG. 7, object 3 is shown at a position represented by distance r1 from sensor section 20 and angle θ1. Distance r2 and angle θ2 in the figure represent values out of detection area 7.

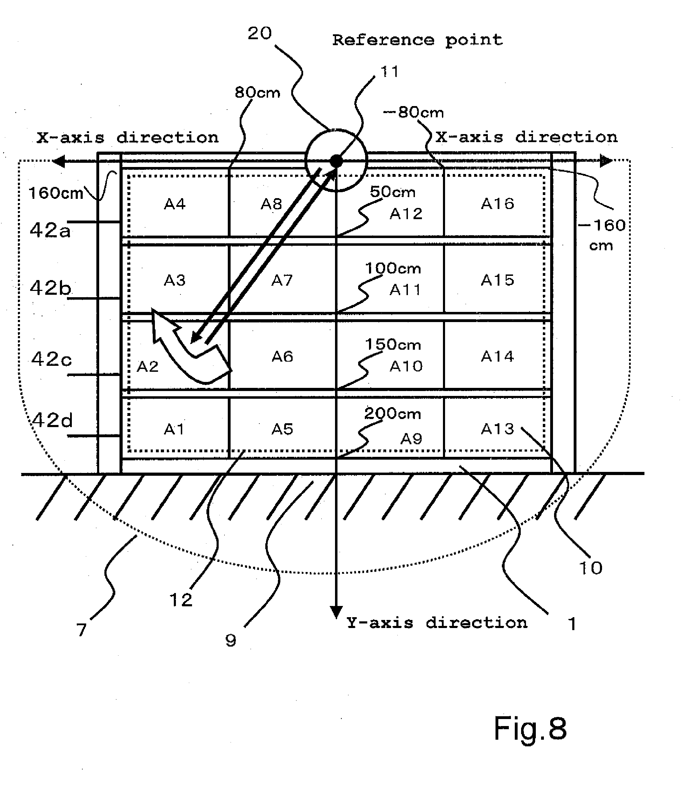

FIG. 8 indicates a state that commodity display place 8 of commodity display shelves 1 (article-placement section) is divided into blocks 10 from A1 to A16 each constituting as an article-placement area. In this embodiment, each block 10 from A1 to A16 is formed in the same size of 50 cm (vertical) by 80 cm (horizontal). Needless to say, the size of the block need not be restricted to this. The blocks can be sized differently each depending on commodity display place 8 that suits a size and a height of a commodity. The number of the blocks may vary as well depending on the number of shelves of commodity display shelves 1. As a result, since each block can communicate with an RF-tag attached to an article, the position-identifying accuracy is increased. The block 10 may be size-variable to suit the condition of a commodity.

The size of commodity display shelves 1 is set to 160 cm to -160 cm in X-axis direction and zero to 200 cm in Y- axis direction with respect to a reference point 11 for the position where sensor section 20 is installed. Blocks A4, A8, A12, and A16 are allocated to the communication range of antenna section 42a; and blocks A1, A5, A9, and A13 are allocated for the communication range of an antenna section 42d. Although the description in this embodiment is made that the communication range of one antenna section is set for several article-placement areas, the communication range of one antenna section may be set for one article-placement area. Because such setting of allocating one or more article-placement areas for a communication range of each antenna section enables communication with an RF-tag attached to an article in each of the article-placement areas, the positioning accuracy can be improved.

Since detection area 7 by projection light 30 emitted from sensor section 20 is provided to cover commodity taking in/out area 6 of commodity display shelves 1, the detection is made not only for commodity 2 displayed on commodity display shelves 1 and approaching object 3 but also fixed obstacles, which are undesirable objects to be detected, such as a floor 9 or wall within a store where commodity display shelves 1 is installed, or a pole of a building, and moving obstacles positioned beside commodity display shelf 1, such as a store clerk, a customer, or equipment such as a carriage. To more accurately capture commodity information to which consumers pay attention, position information of such background objects need to be removed from the detected objects. To remove the position information of such obstacles, defining a detection area corresponding to commodity display place 8 of blocks A1 to A16 of commodity display shelves 1 as the upper limit of an effective detection area, system management section 60 performs effective information extraction process in which position information on any obstacle detected in a place other than a valid detection area 12 is removed.

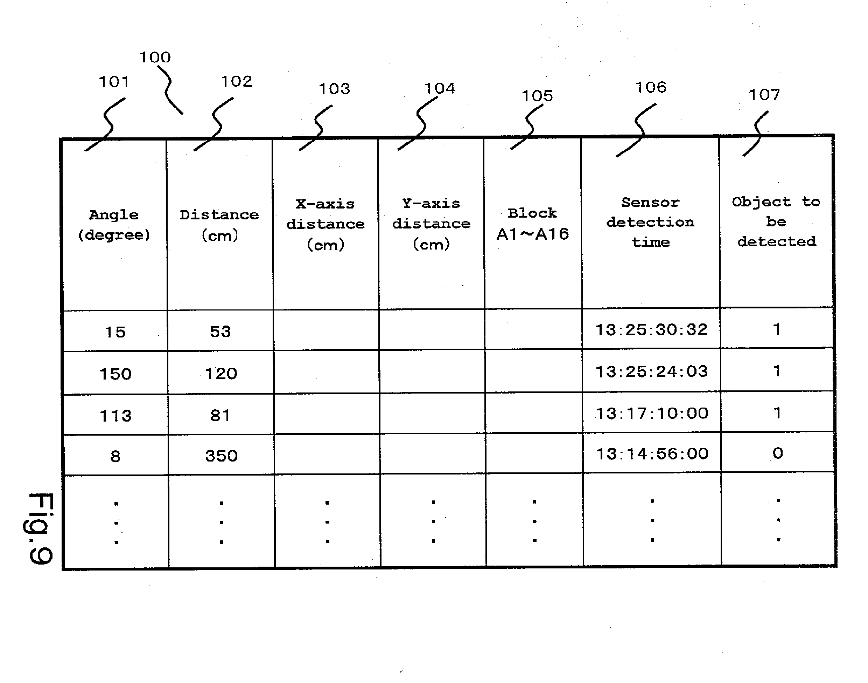

FIG. 9 is a view showing a structure of an object position specifying table 100 representing object-position information stored in storage section 64 of system management section 60. Object-position information table 100 provides an angle field 101, a distance field 102, an X-axis distance field 103, a Y-axis distance field 104, a block field 105, a sensor detection time field 106, and a detection object field 107. Angle θ and distance r that are sent from sensor section 20, and sensor detection time information on when an object is detected are stored in angle field 101, distance field 102, and sensor detection time field 106, respectively. X-axis distance information and Y-axis distance information are calculated from angle information stored in angle field 101 and distance information stored in distance field 102, respectively, and the results are stored in X-axis distance field 103 and Y-axis distance field 104, respectively. A location value on one block being selected from blocks A1-A16 is calculated from X-axis distance information stored in X-axis distance field 103 and Y-axis distance information stored in Y-axis distance field 104, and this block information is stored in block field 105 as article area information representative of an article-placement area where an article is positioned. "1" is written in detection object field 107, if the relative position information is to be applicable to a valid detection object determined in the valid information extraction process; "0" is written if the position information is not applicable to such a valid detection object. A determination can be made from the detection object information in detection object field 107 whether or not a given object is to be selected as a detection object. Such angle information, distance information, X-axis distance information, Y-axis distance information, block information, detection time information, and detection object information are object position information.

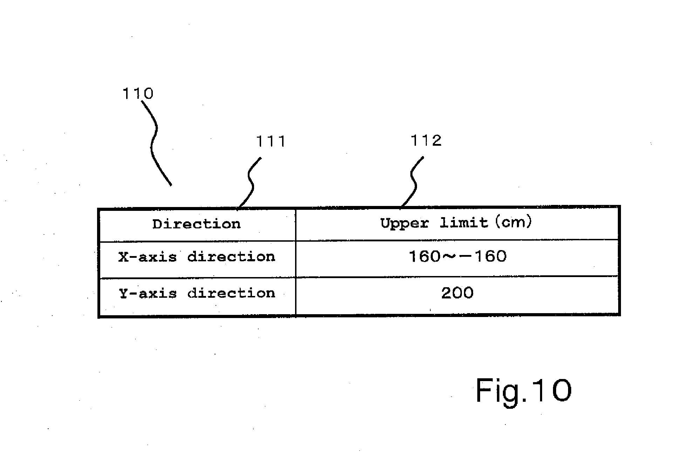

FIG. 10 shows a structure of a valid area table 110 stored in storage section 64 of system management section 60. Valid area table 110 functions as a valid area storage section storing the upper limits with respect to a size of valid detection area 12 that defines a valid detection area in detection area 7 formed by sensor section 20. Being associated with a direction field 111, an upper limit field 112 storing upper limits (area information) in the respective directions.

In this embodiment, 160 cm to -160 cm for the X-axis direction and 200 cm for the Y-axis direction are stored in upper limit field 112 as the upper limits with respect to the reference point where sensor section 20 is installed. Position information exceeding these upper limits is processed in the valid information extraction process as position information of an obstacle out of the applicable detection objects, which is calculated based on the reflection from obstacle 9 that exists outside valid detection area 12, and excluded from the applicable detection objects.

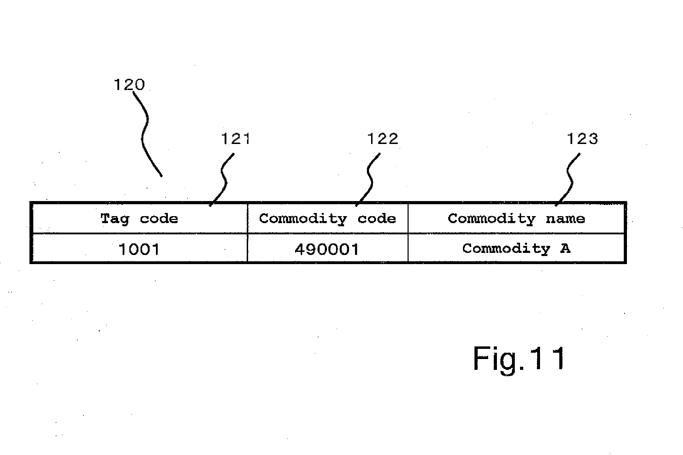

FIG. 11 shows a structure of an RF-tag memory table 120 stored in storage section 54 of RF tag 43. In this table there are provided a tag-code field 121 storing a tag code for identifying an RF-tag, commodity-code field 122 storing a commodity code for identifying a commodity, and commodity-name field 123 storing a commodity name.

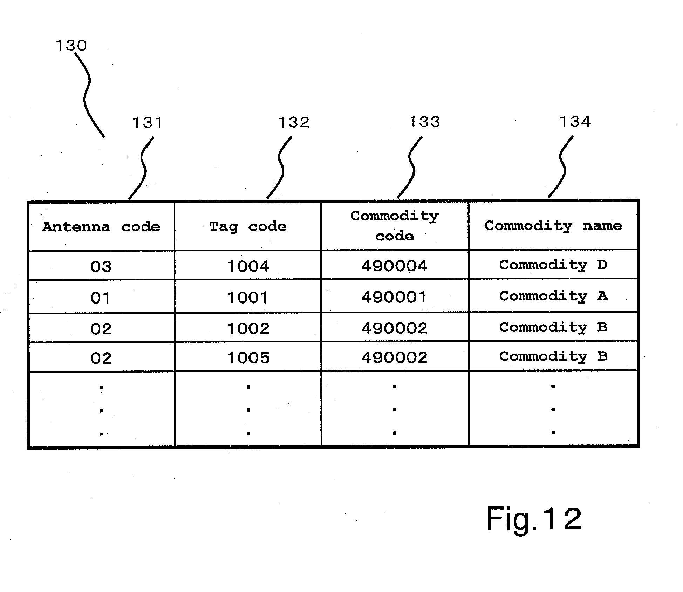

FIG. 12 shows a structure of an RF-tag information buffer 130 stored in storage section 48 of RF-tag reader 41. In this buffer there are provided an antenna-code field 131, a tag-code field 132, a commodity-code field 133, and a commodity-name field 134. The antenna-code field is a field storing antenna information representative of each antenna output by RF-tag reader 41, that is, a field storing an antenna code representing which antenna a given RF-tag has been read from. The antenna code is allocated to each of the leak-transmission lines. For example, an antenna code corresponding to leak-transmission line 42a is set to 01; an antenna code corresponding to leak-transmission line 42b is set to 02; and an antenna code corresponding to leak-transmission line 42c is set to 03. The tag code, commodity code, commodity name, etc. are RF-tag read information.

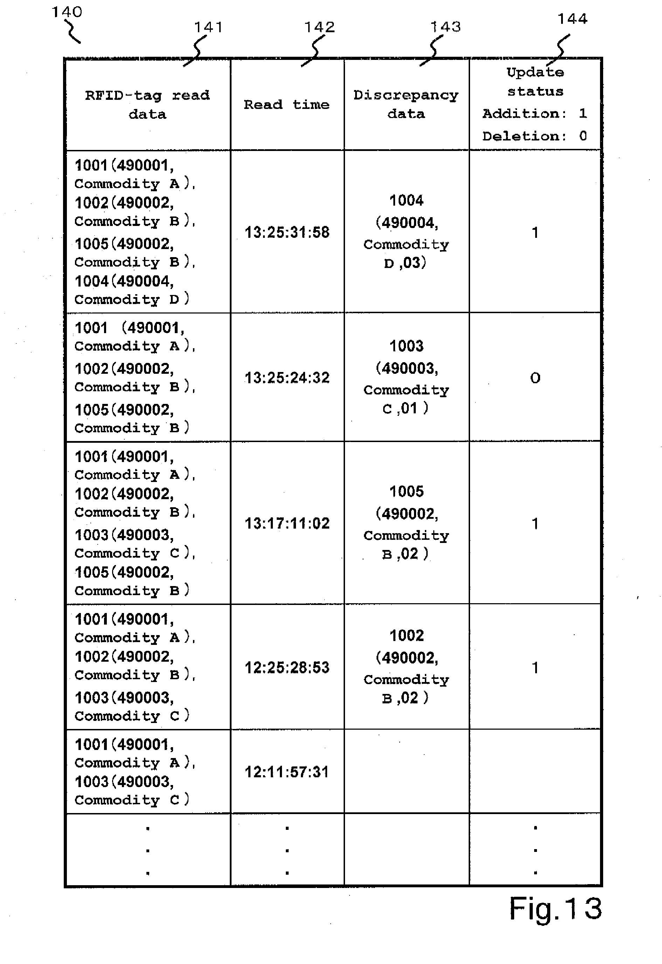

FIG. 13 shows a structure of an RF-tag information table 140 stored in storage section 64 of system management section 60. There are provided therein an RF-tag read information field 141, a read-time field 142, a discrepancy information field 143, and an update status field 144. In addition to the above information item, read time information, discrepancy information, update status information, etc. are also included in the RF-tag read information.

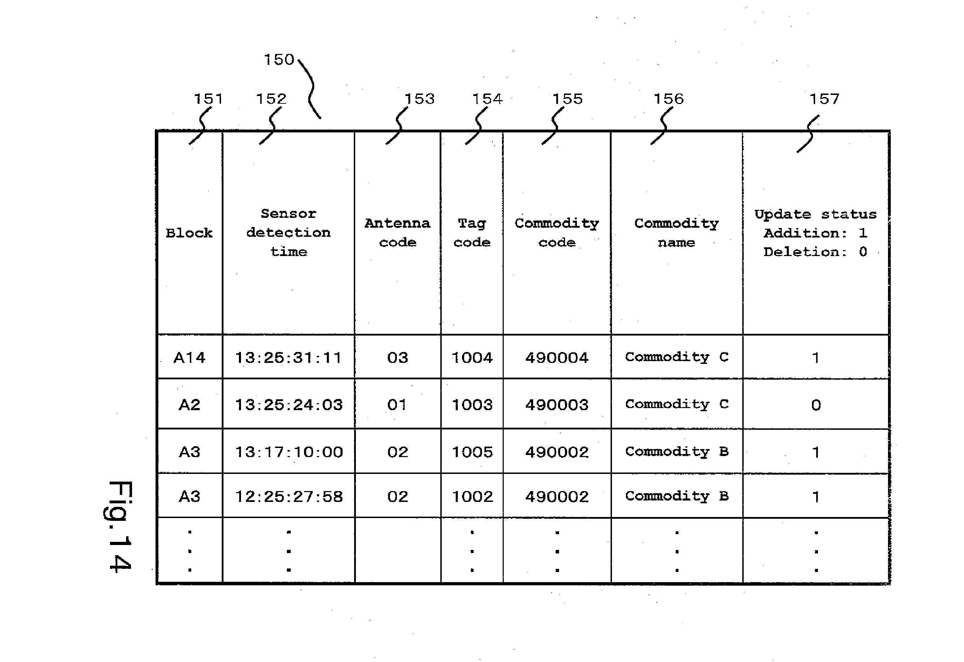

FIG. 14 shows a structure of an article-position identifying table 150 stored also in storage section 64 of system management section 60. In this article-position identifying table 150, there are provided a block field 151, a sensor detection-time field 152, an antenna-code field 153, a tag-code field 154, a commodity-code field 155, a commodity-name field 156, and an update status field 157. At least one of the above-mentioned object position information items and at least one of RF-tag read information items that are correlated to each other are the article position identifying information. In this embodiment, the description was made that the article position identifying information includes an antenna code. However, such antenna code is not always necessary.

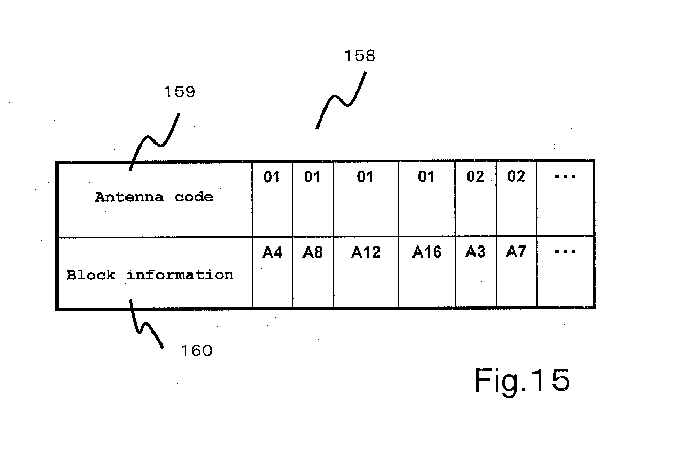

FIG. 15 shows a structure of an antenna-block setting table 158 stored in storage section 64 of the system management section 60 with correct combination between the antenna code and block information having been previously set up. This table provides an antenna-code field 159 storing antenna codes and a block-information field 160 storing block information that individually correspond to each other.

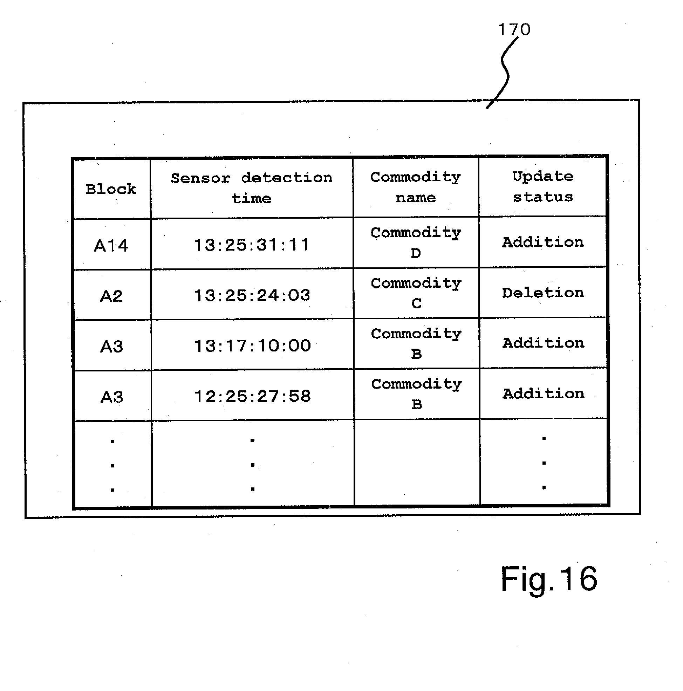

FIG. 16 shows a display screen 170. Display screen 170 is displayed on a liquid crystal display device, which is one device of output section 63 of system management section 60. The display device includes a cathode ray tube (CRT) and an organic electro luminescence display.

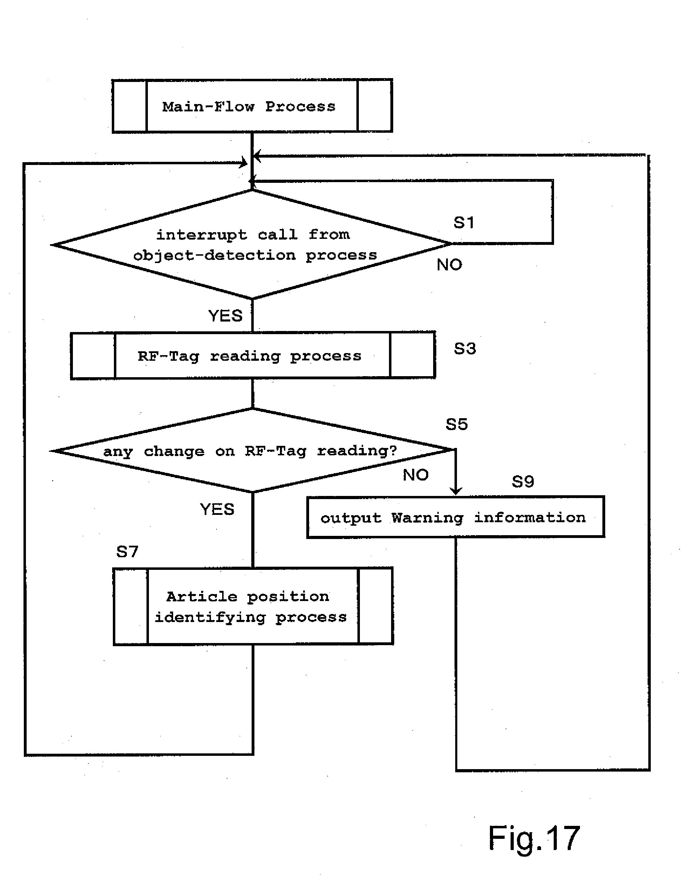

Now, the processing of an article management system 90 will be described in reference to flowcharts in FIGS. 17-20, FIG. 17 is a flowchart of main-flow process processed by an MPU 61 of a control section of system management section 60. MPU 61 of system management section 60 stands by for occurrence of an interrupt called from the object detection process that is operated when sensor section 20 has detected object 3 (step S1).

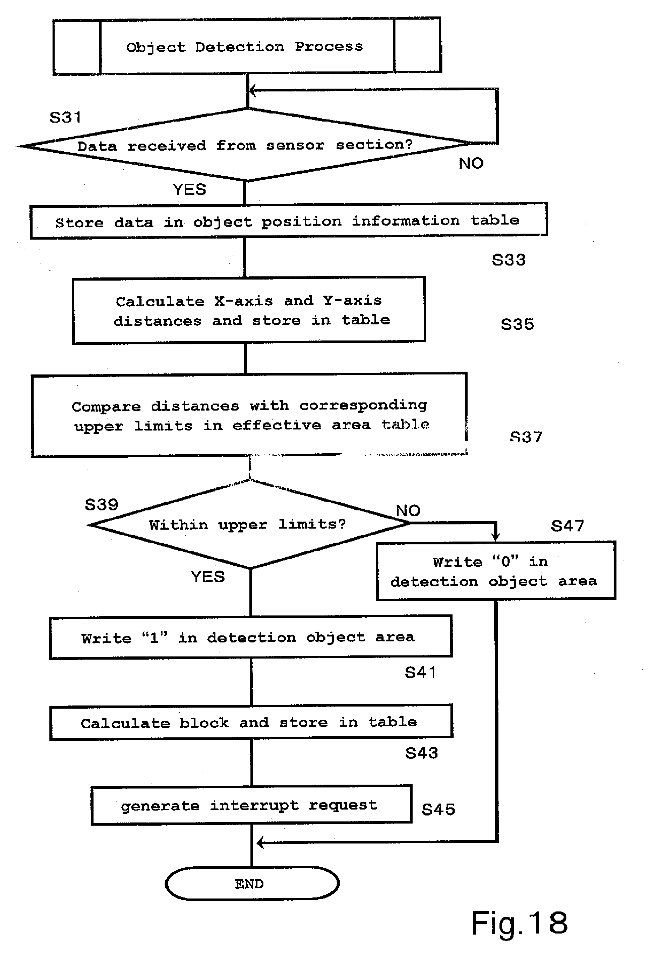

Herein, the object detection process will be explained. FIG. 18 is a flowchart of the object detection process that is executed by MPU 61 of the control section of system management section 60. The object detection process is performed by the object detection section. Sensor section 20 calculates angle information and distance information relating to object 3, and transmits to system management section 60 object position information composed of the angle information, distance information, and detection time information representing a time when object 3 is detected. System management section 60 stands by for receiving object position information detected by sensor section 20 (step S31).

Upon receipt of the object position information (YES at step S31), system management section 60 stores the received object position information in object position information table 100 (step S33).
The angle information of the object position information is stored in angle field 101; the distance information is stored in distance field 102; and, detection time information is stored in X-axis distance field 103.

System management section 60 then calculates an X-axis distance and ε Y-axis distance from angle information stored in angle field 101 of object position information table 100 and distance information stored in distance field 102, and stores them X-axis distance field 103 and Y-axis distance field 104, respectively, of object position information table 100 (step S35).

The X-axis distant information and Y-axis distant information stored in X-axis distance field 103 and Y-axis distance field 104, respectively, of object position information table 100 are compared to the upper limits data of valid detection area 12 of X-axis and Y-axis stored in upper limit field 112 of valid area table 110 (step S37).

A determination is made if the distance information stored in X-axis distance field 103 and Y-axis distance field 104 of object position information table 100 fall within the upper limit information stored in upper limit field 112 of valid area table 110 (step S39). If the distance information is found not within the upper limit information (NO, in step S39), "0" is written in detection object field 107 of object position information table 100 by the finding that object 3 was detected outside valid detection area 12 of commodity display shelves 1 (step S47), and the object detection process terminates. If the distance information is found within the upper limit information (YES, in step S39), "1" is written in detection object field 107 of object position information table 100 by the finding that object 3 was detected within valid detection area 12 of commodity display shelves 1 (step S41). Hereby, there can be excluded from applicable detection objects the position information of a background object 9 that is unnecessary to be detected as an object approaching to commodity 2, such as a store clerk or customer moving around commodity display shelves 1, or poles, walls, or equipment around commodity display shelves 1.

Subsequently, block information is calculated from the X-axis distant information stored in X-axis distance field 103 and Y-axis distant information stored in Y-axis distance field 104, and this block information is stored in block field 105 (step S43). Then, an interrupt request is generated to the main-flow process (step S45), and the object detection process terminates.

Now, referring back to the flowchart in FIG. 17, upon an occurrence of an interrupt in the object detection process (YES, at step S1), the RF-tag read process is executed (step S3).

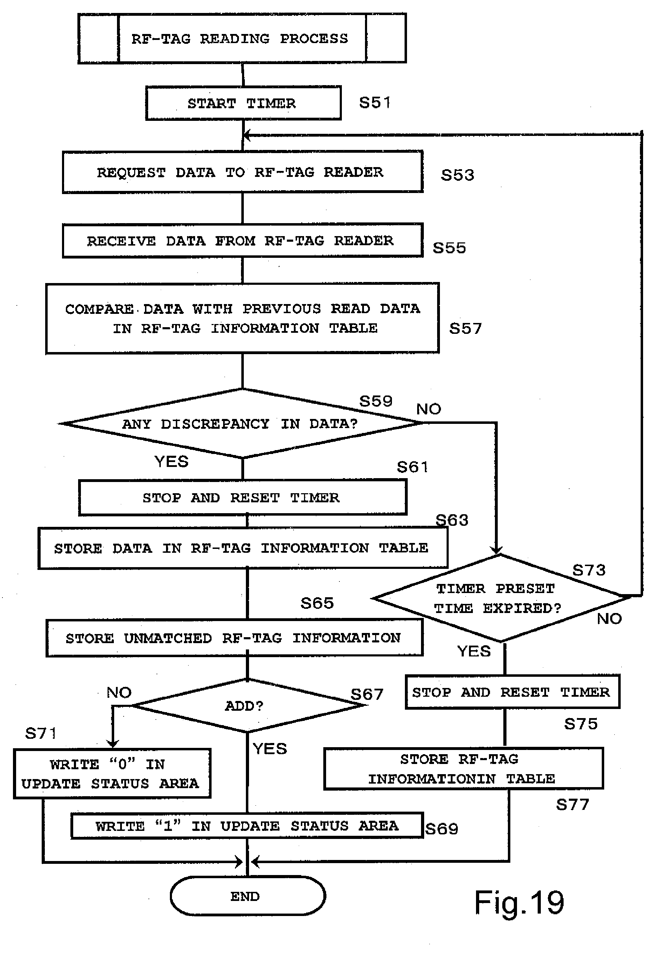

FIG. 19 is a flowchart illustrating the RF-tag read process executed by MPU 61 of the control section of system management section 60. The RF-tag read process is performed by the RF-tag reading section. The RF-tag read information acquired by this RF-tag reading section may include information representative of whether data of a tag code, commodity code, and commodity name contained in an RF-tag has been read or not.

When article management system 90 is initiated, RF-tag reader 41 provided in RF-tag reading section 40 continuously transmits a reading radiowave for reading RF tag 43 via the leak transmission lines 42a, 42b, 42c, and 42d, while sequentially switching the leak transmission lines. More specifically, a plurality of RF-tag readers each connected to one antenna section are provided, and the use is made by sequentially switching these RF-tag readers one by one. Otherwise, the switching of the RF-tag readers can be achieved by switching the antenna sections. Upon receipt of a responded radiowave from any RF tag 43, the RF-tag reader 41 reads the respective data of tag code, commodity code, and commodity name from the responded radiowave and stores RF tag read information composed of these data in RF-tag information buffer 130 provided in storage section 48 of RF-tag reader 41. Then, RF-tag information buffer 130 is searched for a tag code that has then been read. If an identical tag code to this tag code is found to be stored therein, the RF tag read information having been read is discarded; if the same tag code is not found to be stored therein, then the RF tag read information is stored. By processing an identical tag code in this way, duplicative data reading can be prevented.

System management section 60 initiates a timer section 65 (step S51), and requests RF-tag reading section 40 for transmission of the RF tag read information that has been read (step S53). When being requested for transmission of the RF tag read information from system management section 60, RF-tag reading section 40 transmits the RF tag read information and antenna code stored in RF-tag information buffer 130 provided in storage section 48 of RF-tag reader 41.

Upon receipt of the RF tag read information from RF-tag reading section 40 (step S55), system management section 60 compares it to previous RF tag read information stored in RF-tag information table 140 (step S57) to determine whether or not the received RF tag read information differs from the previously stored RF tag read information (step S59). In this embodiment, the RF tag read information composed of tag code, commodity code, and commodity name is compared for the determination. However, since the use is made so that the same tag code does not exists, only tag code may be used for the comparison.

If a determination is made that the received RF tag read information conforms to the previously stored RF tag read information (NO, in step S59), then a determination is made if the timer has not expired from a predetermined time (step S73). If it is determined that the timer has not expired from a predetermined time (NO, in step S73), flow returns to step S53 to reiterate operations of step S53 through step S59. If it is determined that the timer has expired from a predetermined time (YES, in step S73), the timer is made to stop and is reset (step S75). Then, the received RF tag read information is stored in RF-tag information table 140 (step S77). The tag code, commodity code, and commodity name of the received RF tag read information are stored in RF-tag read information field 141, the read time information of time when the RF tag read information is received from RF-tag reading section 40 is stored in read-time field 142. No data is stored in discrepancy information field 143 and update status field 144. Then, RF-tag reading process terminates.

If any difference is found between the received RF tag read information and the previously stored RF-tag read information (YES, in step 59), the timer is stopped and reset (step S61), and the received RF-tag read information is stored in RF-tag information table 140 (step S63). Tag code, commodity code, and commodity name of the received RF tag read information are stored in RF-tag read information field 141 of RF-tag information table 140, the read time information of time when the RF tag read information is received from RF-tag reading section 40 is stored in read-time field 142. The RF tag read information that is found different from the previous RF tag read information is stored in discrepancy information field 143 (step S65)

Then, a determination is made if the RF-tag read information stored in discrepancy information field 143 is added data or deleted data with respect to the previous RF-tag read information (step S67). The RF-tag read information in the field 143 is determined as added data if the information in question is found to exist in the latest RF-tag read information but not in the previous RF-tag read information in the result of the comparison between the latest RF-tag read information and the previous RF-tag read information. On the contrary, the information in question is determined as deleted data if the information is found not to exist in the latest RF-tag read information but exist in the previous RF-tag read information. When the information in question is determined not to be added one (No, step 67), "0" is written in update status field 144 of RF-tag information table 140 (step 71), and the RF-tag read process terminates. Writing "0" in update status field 144 means that RF tag 43 storing that particular tag code has been removed from commodity display shelves 1 within the communication area of RF-tag reading section 40. When the information in question is determined to be added one (YES, step 67), "1" is written in update status field 144 of RF-tag information table 140 (step S69), the RF-tag read process terminates. Writing "1" in update status field 144 means that RF tag 43 storing that tag code has been newly added to commodity display shelves 1 within the communication area of RF-tag reading section 40.

In the RF-tag read process, if there is a newly read RF-tag, "1" representative of "addition" is written in update status field 144 of RF-tag information table 140, while, if there is an unreadable RF-tag, "0" representative of "deletion" is written in update status field 144. This is done for the purpose that a determination can be made from the reading result of RF tag 43 that commodity 2 has been brought in on commodity display shelves 1 within the communicable area of RF-tag reading section 40 or that commodity 2 has been taken out from the shelves. Presence of "1" or "0" in update status field 144 of RF-tag information table 140 means that a change has been made as to the RF-tag read information of the reading result of RF tag 43.

Now, referring back to the flowchart in FIG. 17, a determination is made if there is any change in RF-tag read information as the result of the RF-tag reading process (step S5). That is, a determination is made whether "1" or "0" is stored in update status field 144 of the latest RF-tag read information stored in RF-tag information table 140. No change being made as to the RF-tag read information, that is, storing neither "1" nor "0" in update status field 144 (NO, in step S5), means that the reading result showed no change regardless of an indication of detection of object 3. This suggests possibility of a failure in any of sensor section 20, RF-tag reading section 40, or RF tag 43. Then, warning information of an error sound or message is output by means of a sound or display to inform a store clerk of it (step S9). Flow returns to step S1.

If there is any change on the RF-tag read information in step S5, that is "1" or "0" is stored in update status field 144 of the latest RF-tag read information stored in RF-tag information table 140 (YES, in step S5), article-position identifying process is executed (step S7).

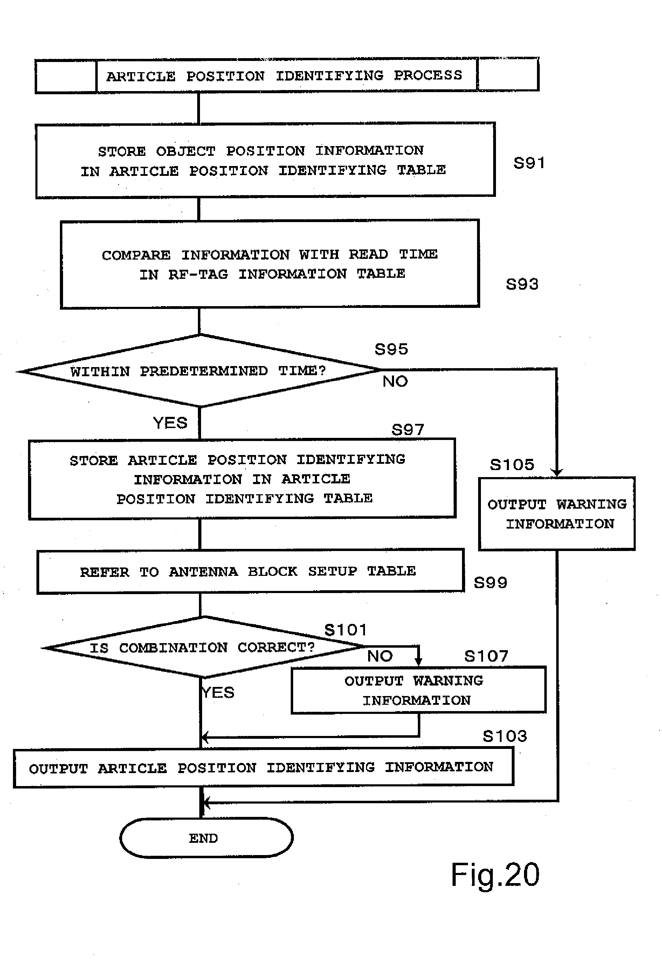

FIG. 20 shows a flowchart of the article-position identifying process that is executed by MPU 61 of the control section of system management section 60. This article-position identifying process is performed by the article-position identifying section. First, the object position information having indication of "1" in detection object field 107 of object position information table 100 is stored in article-position identifying table 150, wherein the block information is stored into block field 151 and the detection time information is stored into sensor detection-time field 152 (step S91).

Subsequently, the detection time information in sensor detection-time field 152 and read time information of the latest RF-tag read information stored in read-time field 142 of RF-tag information table 140 are compared to each other (step S93). Then, a determination is made whether the difference between the detection time information in sensor detection-time field 152 and the read time information in read-time field 142 is within a prescribed time (step S95). When a determination is made that the difference is not within the prescribed time (NO, in step S95), it means that no change was made in the reading result of RF tag 43 within the prescribed time regardless of the indication of the detection of object 3. This suggests a possibility of any failure of sensor section 20, RF-tag reading section 40, or RF tag 43. In this case, warning information of an error sound or message is output by means of a sound or display to inform a store clerk of it (step S105), and the article-position identifying process terminates. The determination time in the determination step of step S95 is set to three seconds. If no change occurs in the reading result of RF tag 43 within three seconds following detection of object 3, then the warning information is issued.

If it is determined that the difference between the detection time information in sensor detection-time field 152 and the read time information in read-time field 142 is within the predetermined time (YES, step S95), the object position identifying information, in which the RF-tag read information is correlated with the object position information including an antenna code stored in step 91, is stored in article-position identifying table 150 (step S97). Next, referring to antenna-block setting table 158 (step S99), a determination is made if the antenna coverage field and block field 151 are related as has been set, that is, if the antenna code of antenna-code field 153 and block information of block field 151 are in the correct combination. If it is determined that the relation is not in the correct combination as has been set (NO, in step S101), since a functional failure of the sensor section or antenna section can be considered, warning information of an error sound or message is output by means of a sound or display to inform a store clerk of it (step S107). Therefore, in the possible case where the combination between the object position information and RF-tag read information is incorrect, a notification is announced so that the user can be prompted to address the problem.

In the meantime, if it is determined that the relation between the antenna coverage area and the block is in correct combination (YES, in step S101), a tag code stored in discrepancy information field 143 of RF-tag information table 140 is stored in tag-code field 154 of article-position identifying table 150; commodity code stored in discrepancy information field 143 is stored in commodity-code field 155; commodity name stored in discrepancy information field 143 is stored in commodity-name field 156; and update status information stored in update status field 144 is stored in update status field 157.

Based on the object position information stored in article-position identifying table 150 and the RF-tag read information, the article-position identifying information composed of commodity 2 placed in commodity display shelves 1 and the position information identified thereby are output to display screen 170 (step 103). The display screen 170 shown in FIG. 16 is one example of the output of the article-position identifying information. When "1" representative of "addition" is stored in update status field 157 of article-position identifying table 150, block information of commodity 2 (article) added on commodity display shelves 1 (article-placement section), time information as to when that particular article was added thereon, commodity information identifying commodity 2 such as a commodity name, and display information of "addition" indicating that that particular article is added are output to be displayed in the display section of output section 63 of system management section 60 as the article-position identifying information. When "0" representative of "deletion" is stored in update status field 157 of article-position identifying table 150, block information of commodity 2 (article) removed from commodity display shelves 1 (article-placement section), time information when that article was removed therefrom, commodity information identifying commodity 2 such as a commodity name, and display information of "deletion" indicating that that particular article is removed are output to be displayed in the display section of output section 63 of system management section 60 as the article-position identifying information. Thus, the store clerk can visually manage the positions of the articles by means of this article-position identifying information. Furthermore, outputting the block information allows the store clerk to easily find and efficiently identifying article positions. Herein, the article-position identifying process terminates, and the system stands by for another interrupt from the object detection process.

Now, in the case that it is determined that the relation between the antenna coverage area and the block is incorrect combination (NO, in step S101), following the notification in the above-described manner (step S107), the relative block information and antenna information are displayed on the display section of output section 63 of system management section 60 as article-position identifying information, based on the object position information stored in article-position identifying table 150 and the RF-tag read information. This displayed information allows the user to determine, for example, which one of the sensor section and antenna section has been failed to operate.

In the above embodiment, the description was made that the article-position identifying information is displayed on the display section as one of outputting forms. However, the output of the information need not be restricted to such a form. Instead, such article-position identifying information stored in article-position identifying table 150 may be output to another software application in the form of data as is to allow the application to manage the article positions. Alternatively, such article-position identifying information may be printed by a printer so that article positions can be managed by a report.

Thus, according to the first embodiment of the present invention, by identifying position information of an object by means of the object position information output by the object detection section of sensor section 20, identifying identification information of commodity 2 by means of RF-tag read information output by RF-tag reading section 40, and correlating the object position information to the RF-tag read information, article-position identifying information of commodity 2 placed on commodity display shelves 1 is enabled to be output. Particularly, because the object position information is detected by the object detection section that is different from the RF-tag reading section, blocks where objects are located can be securely identified without occurrence of radiowave interference by the RF-tag reading section or read errors. Moreover, by using the RF-tag read information detected by the antenna section whose communication range is allocated to blocks to perform communications and object detection information of the sensor section, a highly reliable article management system can be realized.

Because the leak transmission line has such a field intensity distribution that the field intensity is strong in the proximity thereto and gradually lowered as being away from the line, there is no possibility that RF-tags outside of the communication area of the leak transmission line are read. This prevents incorrect article management from being carried out in such a way that position information of an object read out by the object reading section when the object approaches to the article-placement section is correlated to RF-tag information read from an RF-tag of an article that has only approached to the article-placement section but is not placed therein.

By the provision of the switching device within the system, where a plurality of leak transmission lines are arranged, RF-tag reader 41 need not be installed corresponding to each of the leak transmission lines.

In this embodiment, RF-tag reading section 40 is initiated by an interrupt called from the object detection section, and then terminated upon completion of the RF-tag read process. That is, RF-tag reading section 40 is initiated to read RF tag 43 only when the object detection section detects object 3. Thus, a low running-cost system suppressing the power consumption of RF-tag reading section 40 can be structured.

### [Second Embodiment]

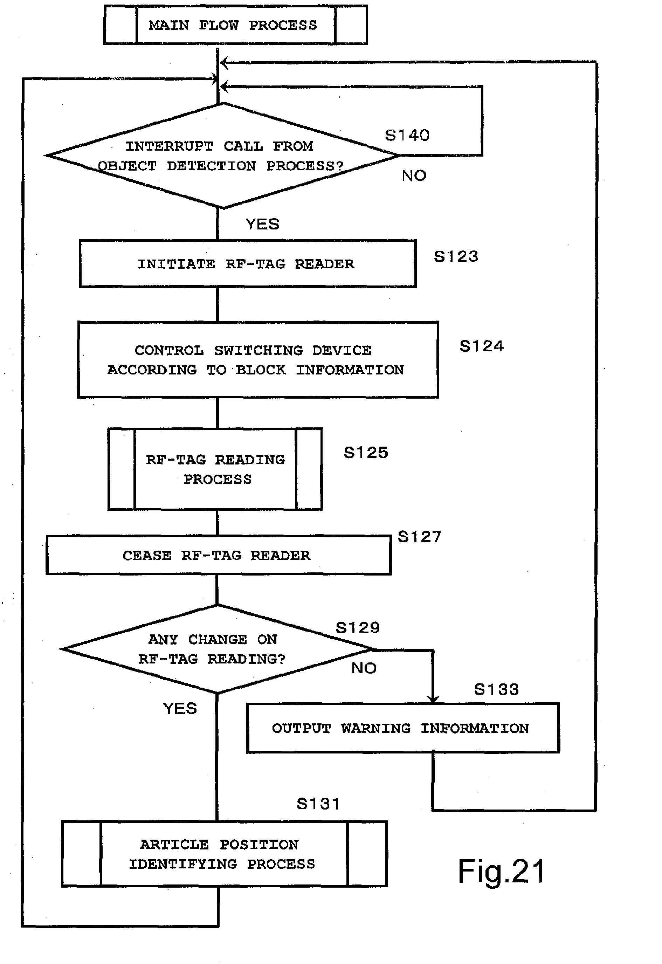

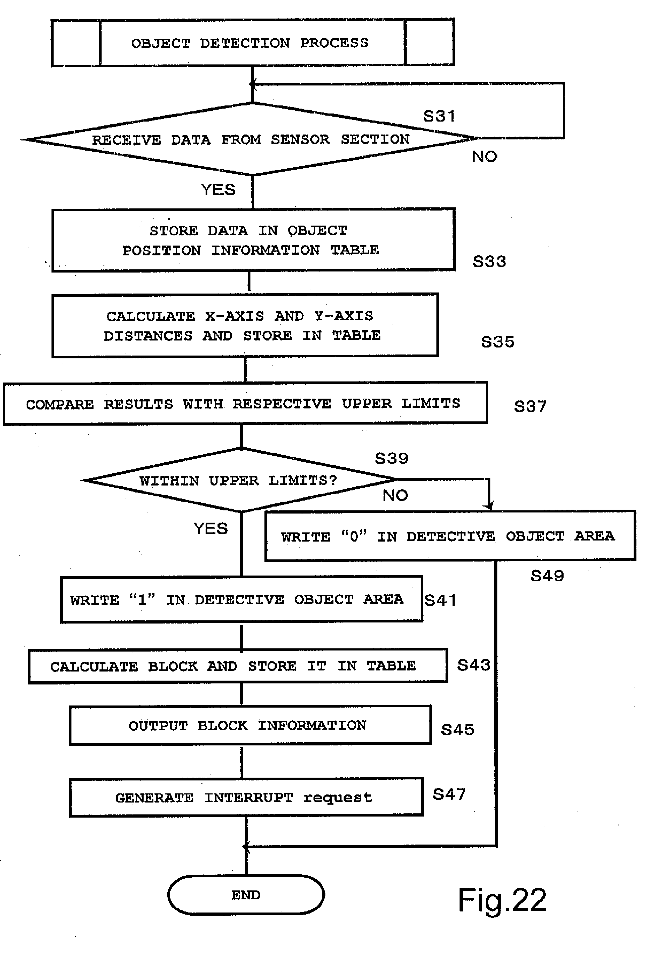

A second embodiment of the present invention will now be described in reference to FIGS. 21 and 22. Descriptions common to the first embodiment will be omitted. In the first embodiment, the description was made for the structure in which, RF-tag reading section 40 starts to operate at nearly the same time as the initiation of system management section 60. In the second embodiment, a description will be made for the structure that RF-tag reading section 40 is initiated when an interrupt process is called from the object detection process.

FIG. 21 shows a flowchart of the main-flow process that is performed by MPU 61 of the control section of system management section 60. MPU 61 of system management section 60 receives object position information from sensor section 20, and stands by for an interrupt called from the object detection process (step S140).

The object detection process in the second embodiment will now be described. FIG. 22 shows a flowchart illustrating the object detection process executed by MPU 61 of the control section of system management section 60. This object detection process is mostly similar to that of the first embodiment, except that, in this embodiment, after "1" is written in Y-axis distance field 104 of object position information table 100 (step S39), block information is output as object position information (step S45).

The operation proceeds from step 31 though step 39 in the similar manner as in the first embodiment. After "1" is written in detection object field 107 (step S41), a block is calculated from X-axis distance information stored in X-axis distance field 103 in position information table 100 and Y-axis distance information stored in Y-axis distance field 104 in the same table, and the block information indicating this block is stored in block field 105 (Step S43) and output (step S45). Then, an interrupt request is generated to the main-flow process (step S47), and the object detection process terminates.

Now, returning to the flowchart of FIG. 21, upon an occurrence of the interrupt in the object detection procedure (YES, in step S140), RF-tag reading section 40 is initiated (step S123). By the initiation of RF-tag reading section 40, switching device 44 is controlled according to the output block information to select a leak-transmission line 42 allocated corresponding to block 10 (step S124). Then, the RF-tag read procedure is executed (step S125). This RF-tag read procedure is identical to that of the first embodiment, and therefore the description therefor will now be omitted.

Upon completion of the RF-tag read procedure, the operation of RF-tag reading section 40 terminates (step S127). Then, a determination is made whether any change is made as a result of the RF-tag read procedure with respect to the RF-tag read information (step S129). That is, a determination is made whether "1" or "0" is stored in update status field 144 of the latest RF-tag read information in RF-tag information table 140. If no change was made to the RF-tag read information, that is, neither "1" nor "0" is stored in update status field 144 (NO, in step S129), it is considered that a functional failure has likely occurred in any of sensor section 20, RF-tag reading section 40, or RF tag 43 because no change appears on the reading result regardless of the detection of object 3. Warning information of an error sound or message is output by means of a sound or display to inform a store clerk of it (step S133), and the flow returns to step S121.

If a change was made on the read information in step S129, that is, "1" or "0" is stored in update status field144 of the latest RF-tag read information in RF-tag information table 140 (YES, in step S129), the article-position identifying procedure is executed (step S131). Since this article-position identifying procedure is identical to that of the first embodiment, the description therefor will now be omitted. After completion of the article-position identifying procedure, the control stands by for an interrupt called from the object detection procedure again (step S140).

According to the second embodiment, because RF-tag reading section 40 switches switching device 44 according to the block information as article-placement area information contained in the object position information that is output from the object detection section, leak-transmission line 42 whose communication range is allocated for appropriate article-placement area where a relative object is located can be specified. Thus, the antenna for reading an RF-tag can be appropriately selected to be used. Also, mutual interference between the antennas can be prevented and thereby the efficient reading of the RF-tags can be achieved.

This invention is not restricted to the above-described embodiments as they are. The invention may be implemented by modifying any of the elements described above without departing from the sprit and the scope of the invention.

For example, although, in the above embodiments, the invention is applied to an article management system for managing articles, such as commodities in an outlet, e.g., retail store, the invention need not be restricted to such an application. The invention may be applied to an article management system for managing components and materials stored in a warehouse.

In this embodiment, the application is also made to commodity display shelves as the article-placement section. However, it need not be restricted to something on which articles are displayed. For example, the invention can be applied to a conveyer belt, as well, on which one or more articles are placed. Furthermore, although the invention is applied to a structure of vertically arranged commodity-displaying shelves each having articles in the above embodiments, a flat base or a wagon which is partitioned into several horizontal sections to place commodities in the respective sections may also be used instead.

## Claims

1. An article management system comprising:
an object detection section (20) detecting an object approaching to an article-placement section (1) composed of a plurality of article-placement areas to place articles thereon and outputting object position information;
an RF-tag reading section (40) having an RF-tag reader for reading an RF-tag attached to each of the articles and outputting RF-tag read information; and
an article position identifying section storing the object position information and the RF-tag read information correlating the object position information to the RF-tag read information, and outputting the correlated information as article position identifying information,
wherein the RF-tag reading section has a plurality of antenna sections (42) that communicate with the RF-tags, and wherein a communication coverage range of each of the antenna sections is defined to one or more of the article-placement areas.

2. The article management system according to claim 1, wherein the article-placement section is composed of a plurality of blocks, and each of the plurality of article-placement areas is the block.

3. The article management system according to claim 1 or 2, wherein the RF-tag reader outputs antenna information representative of an antenna through which any of the RF-tag has communicated with the RF-tag reader, and the object position information includes article-placement area information, and wherein the article position identifying section determines whether the antenna information and the article-placement area information are related to each other as have been previously prescribed and inform if the two pieces of the information are not related as have been prescribed.

4. The article management system according to any one of the claims 1 to 3, wherein the article position identifying information includes the article-placement area information.

5. The article management system according to any one of the claims 1 to 4, wherein the RF-tag reading section has a switching device to select one of the plurality of antenna sections for connection.

6. The article management system according to any one of the claims 1 to 5, wherein the object detection section is enabled to detect any object approaching to any of the article-placement areas that compose the article-placement section.

7. The article management system according to claim 5, wherein the RF-tag reading section acquires the object position information output by the object detection section and operates the switching device according to the object position information thus acquired.

8. A method for managing an article comprising:
detecting an object approaching to an article-placement section composed of a plurality of article-placement areas to place articles thereon and outputting object position information;
reading an RF-tag attached to each of the articles and outputting RF-tag read information; and
storing the object position information and the RF-tag read information correlating the object position information to the RF-tag read information, and outputting the correlated information as article position identifying information,
wherein the reading step is implemented by a plurality of antenna that communicate with the RF-tags, and wherein a communication coverage range of each of the antenna is defined to one or more of the article-placement areas.

9. The method according to claim 8, wherein the article-placement section is composed of a plurality of blocks, and each of the plurality of article-placement areas is the block.

10. The method according to claim 8 or 9, wherein the reading step outputs antenna information representative of an antenna through which any of the RF-tag has communicated, and the object position information includes article-placement area information, and further includes determining step for determining whether the antenna information and the article-placement area information are related to each other as have been previously prescribed and informing if the two pieces of the information are not related as have been prescribed.

11. The method according to any one of the claims 8 to 10, wherein the article position identifying information includes the article-placement area information.

12. The method according to any one of the claims 8 to 11, wherein the reading step has selecting step for selecting one of the plurality of antenna for connection.

13. The method according to any one of the claims 8 to 12, wherein the detecting step detects any object approaching to any of the article-placement areas that compose the article-placement section.

14. The method according to claim 12, wherein the reading step acquires the object position information output by the detecting step and selecting one of the plurality of the antenna according to the object position information thus acquired.
